# EUROPÄISCHE PATENTSCHRIFT

(11) **EP 3 481 677 B1**
(45) Veröffentlichungstag und Bekanntmachung des Hinweises auf die Patenterteilung: **08.04.2020**
(21) Anmeldenummer: 17740670.9
(22) Anmeldetag: 06.07.2017
(51) Int. Cl.: B60R 21/231

(54) **GASSACK, INSBESONDERE FÜR EIN SEITENVORHANG-AIRBAG-SYSTEM, SOWIE FAHRZEUGSICHERHEITSSYSTEM MIT EINEM SOLCHEN GASSACK**
AIRBAG, IN PARTICULAR FOR A SIDE CURTAIN AIRBAG SYSTEM, AND VEHICLE SAFETY SYSTEM HAVING SUCH AN AIRBAG
AIRBAG, EN PARTICULIER POUR UN SYSTÈME D'AIRBAG RIDEAU LATÉRAL, ET SYSTÈME DE SÉCURITÉ POUR VÉHICULE COMPRENANT UN TEL AIRBAG

(30) Priorität: 07.07.2016 DE 102016008241
(43) Veröffentlichungstag der Anmeldung: 15.05.2019
(73) Patentinhaber: Dalphi Metal España, S.A., 36213 Vigo (ES)
(72) Erfinder: SANTÍN NAVARRO, Pedro José, 36204 Vigo (ES); FERNANDES OLIVEIRA, Jose Miguel, 4730-083 Braga (PT)
(74) Vertreter: ZF TRW Patentabteilung
(86) Internationale Anmeldenummer: PCT/EP2017/066927
(87) Internationale Veröffentlichungsnummer: WO 2018/007519

(56) Entgegenhaltungen:
- DE-A1-102004 033 012
- DE-A1-102009 050 972
- US-A1- 2005 269 806
- US-A1- 2015 314 746

## Beschreibung

Die Erfindung betrifft einen Gassack, für ein Seitenvorhang-Airbag-System gemäß dem Oberbegriff von Patentanspruch 1 sowie ein Fahrzeugsicherheitssystem, das mit einem solchen Gassack ausgestattet ist gemäß dem Oberbegriff von Patentanspruch 10.

Gassäcke für Airbag-Systeme, insbesondere für Seitenvorhang-Airbag-Systeme, sind seit geraumer Zeit bekannt. Derartige Airbag-Systeme dienen dazu Insassen eines Kraftfahrzeugs im Falle eines Unfalls besser zu schützen. Ein Seitenvorhang-Airbag-System ist zu diesem Zweck oberhalb einer Seitenscheibe angeordnet und entfaltet sich im Falle eines Unfalls vorhangartig nach unten, um auf diese Weise eine Kopf- und Schulterpartie eines Fahrzeuginsassen gegen einen Seitenaufprall besser zu schützen und wird bspw. durch die US 2015/314746 A1 beschrieben.

Ein Nachteil dieser bislang bekannten Seitenvorhang-Airbag-Systeme besteht darin, dass diese einen Thoraxbereich des Fahrzeuginsassen nicht abdecken und ein gesonderter Airbag (Thoraxairbag) vorgesehen werden muss, um einen besseren Schutz auch im Brustkorbbereich zu erhalten.

Würde man nun das bekannte Seitenvorhang-Airbag-System so umändern, dass sich dieses in vertikaler Richtung weiter nach unten, also über den Schulterbereich hinaus und in einen Bereich seitlich des Thorax eines Fahrzeuginsassen hinein erstreckte, um auf diese Weise auch dem Brustkorbbereich eines Fahrzeuginsassen mit nur einem Airbag pro Fahrzeuginsasse zu schützen, würde sich ein neues Problem ergeben, nämlich ein deutlich höheres Gassackvolumen und damit einhergehend, das Problem, eine zeit- und volumengenaue Füllung eines derartig großen Gassacks zu bewerkstelligen. Dies wäre insbesondere problematisch, da der Gassack, ausgehend von dem zur Füllung des Gassacks vorgesehenen Gasgenerator, der entweder in einer Säule oder im Dach eines Kraftfahrzeugs angeordnet ist, sukzessive gefüllt wird, wobei sich konstruktionsbedingt zunächst die weiter oben, näher an der Gasversorgung, liegenden "Vorhang-Abschnitte" des Gassacks füllen und erst zuletzt der weiter unten liegende Abschnitt, der zum Schutz des Thorax vorgesehen ist.

Aus diesem Grund wurden in der Vergangenheit auch Airbagsysteme vorgeschlagen, welche den Thoraxbereich eines Fahrzeuginsassen unter Zuhilfenahme eines zweiten Gassack, wie in bspw. die DE 10 2009 050972 A1 zeigt, schützten.

Ein Nachteil derartiger Airbag-Systeme, respektive Gassäcke, besteht jedoch darin, die unterschiedlichen Gassackkammern bzw. Gassäcke zeitlich so aufeinander abgestimmt zu füllen, dass die Kammern bzw. Gassäcke zur Gewährleistung eines optimalen Insassenschutzes zur richtigen Zeit korrekt gefüllt und korrekt positioniert sind.

Derartige Airbag-Systeme sind beispielsweise in der WO 2008/011414 A2, der US 7,350,804 B2 oder der US 2005/0134025 A1 beschrieben.

Der Erfindung liegt die Aufgabe zugrunde unter Vermeidung der oben genannten Nachteile einen Gassack (pro Fahrzeuginsasse), insbesondere für ein Seitenvorhang-Airbag-System sowie ein Fahrzeugsicherheitssystem, das mit einem solchen Gassack ausgestattet ist, zur Verfügung zu stellen, wobei das Gassackvolumen sowohl zeitlich als auch räumlich so mit Gas befüllt wird, dass ein optimierter Insassenschutz gewährleistet ist.

Diese Aufgabe wird durch einen Gassack, insbesondere für ein Seitenvorhang-Airbag-System, gemäß Patentanspruch 1 sowie durch ein Fahrzeugsicherheitssystem gemäß Patentanspruch 10 gelöst, das mit einem solchen Gassack ausgestattet ist.

Insbesondere wird die Aufgabe durch einen Gassack, insbesondere für ein Seitenvorhang-Airbag-System, gelöst, wobei der Gassack einen Gassackinnenraum aufweist, der im entfalteten Zustand des Gassacks eine einzige Kammer definiert, wobei die Kammer wenigstens eine Gasleitvorrichtung aufweist, durch welche die Kammer in wenigstens einen primären Füllbereich und in wenigstens einen sekundären Füllbereich unterteilt wird.

Ein wesentlicher Punkt der Erfindung liegt darin, dass anhand der Gasleitvorrichtung, die innerhalb des Volumens des Gassacks im Gassackinnenraum angeordnet ist, ausgehend von einer Fluid-, insbesondere Gasquelle, wie beispielsweise einem Gasgenerator, sowohl eine räumlich als auch eine zeitlich gesteuerte Befüllung des Gassackvolumens möglich ist. Die Gasleitvorrichtung unterteilt den Gassackinnenraum, respektive die den Gassackinnenraum bildende Kammer des Gassacks, zu diesem Zweck in wenigstens einen primären Füllbereich und in wenigstens einen sekundären Füllbereich.

Bei einer Zuführung von Gas in den Gassackinnenraum wird das Gas somit entlang der Gasleitvorrichtung zunächst in den primären Füllbereich geleitet. Eine Zuführung von Gas in den sekundären Füllbereich findet im Wesentlichen erst nach Erreichen eines bestimmten Primärfüllzustandes statt.

Gemäß einer bevorzugten Ausführungsform der Erfindung ist der, respektive die, primäre(n) Füllbereich(e), d.h. zumindest ein primärer Füllbereich, räumlich und/oder strömungstechnisch weiter von der einzigen oder zumindest einer Gaszuführöffnung, durch die eine Gasversorgung des Gassacks stattfinden kann, entfernt, als der/die sekundäre(n) Füllbereich(e) von der jeweiligen selben Gaszuführöffnung.

In diesem Zusammenhang sei erwähnt, dass der oder die primäre(n) Füllbereich(e) gemäß einer bevorzugten Ausführungsform der Erfindung dem Abschnitt des Airbags, respektive Gassacks, der zum Schutz des Thorax vorgesehen ist, zugeordnet ist/sind, während der/die sekundäre(n) Füllbereich(e) dem, insbesondere oberen, "Vorhang-Abschnitt" des Airbags, respektive Gassacks, zugeordnet ist/sind.

Die erfindungsgemäße Gasleitvorrichtung bewirkt, dass die räumlich entfernter von der Gaszuführöffnung angeordneten jeweiligen primäre(n) Füllbereich(e) strömungstechnisch einen geringeren Abstand von der Gaszuführöffnung haben, als die jeweiligen sekundäre(n) Füllbereich(e) von der jeweiligen selben Gaszuführöffnung, so dass bei einem Befüllen des erfindungsgemäßen Gassacks zunächst die primären Füllbereiche mit Gas befüllt werden und erst dann die sekundären Füllbereich.

Gemäß einer bevorzugten Ausführungsform der Erfindung wird dies dadurch bewirkt, dass die Gasleitvorrichtung so ausgebildet ist, dass diese eine Trennung, nämlich eine Trennvorrichtung, wie beispielsweise eine Trennwand oder eine Trennnaht, zwischen den primären Füllbereichen und den sekundären Füllbereichen, respektive zwischen dem primären Füllbereich und dem sekundären Füllbereich, bildet.

Die Gasleitvorrichtung, respektive die Trennvorrichtung, ist zu diesem Zweck im Wesentlichen gasundurchlässig ausgebildet, so dass bei einem Befüllen des Gassacks das aus der Gaszuführöffnung in den Gassack einströmende Gas entlang der Trennvorrichtung in den primären Füllbereich geleitet wird. Die Trennvorrichtung grenzt somit den primären Füllbereich von dem sekundären Füllbereich ab, wobei eine vollständige, insbesondere im Wesentlichen gasdichte, Trennung der beiden Füllbereiche realisiert sein kann oder eine definiert gasdurchlässige Trennung des primären Füllbereichs von dem sekundären Füllbereich vorliegt, so dass ein geringer Anteil des einströmenden Gases entlang der Trennvorrichtung durch diese hindurch auch in den sekundären Füllbereich strömen kann, so dass dieser gleichzeitig mit dem primären Füllbereich, jedoch mit einem deutlich reduzierten Volumenstrom befüllt wird. Der reduzierte Volumenstrom liegt hierbei im Bereich von 1 % bis 20 %, bevorzugt im Bereich von 2 % bis 15 % und besonders bevorzugt im Bereich von 5 % bis 10 %, jeweils bezogen auf den einströmenden Gesamtvolumenstrom des einströmenden Füllgases.

Gemäß einer Ausführungsform der Erfindung ist die Gasleitvorrichtung dadurch gebildet, dass wenigstens zwei einander zugewandte und einander zugeordnete Innenwandabschnitte des Gassacks, unmittelbar oder mittels eines Abstandhalters, insbesondere mittels eines Abstandsbandes, vorzugsweise lösbar, miteinander verbunden sind.

Die Verbindung der einander zugeordneten Innenwandabschnitte des Gassacks ist erfindungsgemäß mittels einer Naht realisiert, die als Klebenaht und/oder als Siegelnaht und/oder als genähte Naht ausgebildet sein kann. Im Falle der Verwendung eines Abstandhalters, insbesondere eines Abstandsbandes, sind die jeweiligen Innenwandabschnitte des Gassacks nicht unmittelbar miteinander sondern über das Abstandsband miteinander verbunden, wobei die jeweiligen Längsseiten, respektive Längskanten, des Abstandsbandes wiederum mittels einer Naht, die wiederum als Klebenaht und/oder als Siegelnaht und/oder als genähte Naht ausgeführt sein kann, mit den zugehörigen, d.h. zugeordneten, Innenwandabschnitten des Gassacks verbunden sind.

Das Abstandsbandes seinerseits kann erfindungsgemäß gasdurchlässig oder mit einer definierten Gasdurchlässigkeit ausgebildet sein, so dass während eines Befüllvorgangs des erfindungsgemäßen Gassacks ein Hauptvolumenstrom in Richtung des primären Füllbereichs und ein reduzierter Sekundärvolumenstrom in Richtung des sekundären Füllbereichs strömt. Durch den Grad der Gasdurchlässigkeit der Trennvorrichtung ist eine gezielte zeitliche und räumliche Steuerung des Befüllvorgangs des erfindungsgemäßen Gassacks möglich, wobei sich die Gasdurchlässigkeit der Trennvorrichtung über deren Länge unterscheiden kann. Zu unterscheiden ist an dieser Stelle auch eine initiale Gasdurchlässigkeit der Trennvorrichtung, die bereits bei Beginn des Befüllvorgangs des Gassacks vorliegt und eine erfindungsgemäße initiierte Gasdurchlässigkeit, die sich beispielsweise durch ein Aufweiten von Poren oder Löchern in der Trennvorrichtung während des Befüllvorgangs ergibt.

Gemäß einer bevorzugten Ausführungsform der Erfindung ist die Verbindung der jeweils einander zugeordneten Innenwandabschnitte des Gassacks, welche die Trennung zwischen primärem Füllbereich und sekundärem Füllbereich bildet, lösbar ausgebildet, so dass die Verbindung, beispielsweise bei einer Zunahme des Innendrucks innerhalb des Gassacks im Zuge eines Befüllens des Gassacks, gelöst, respektive geöffnet wird, so dass Gas durch diese sich lösende Verbindung, d.h. sich öffnende Trennung, von der Gaszuführöffnung und zudem von dem primären Füllbereich in den sekundären Füllbereich strömen kann, so das sich nunmehr auch der sekundäre Füllbereich im Wesentlichen vollständig mit Füllgas füllt. Im Falle der Verwendung eines Abstandsbandes kann eine Längskante des Bandes fest mit der zugeordneten Innenwand des Gassacks verbunden bleiben, während sich bei einem Aufbrechen der Verbindung die andere Längskante des Bandes von dem zugeordneten Innenwandabschnitt des Gassacks löst.

Erfindungsgemäß kann die Klebe- und/oder Siegel- und/oder Näh-Naht eine unterschiedliche Nahtfestigkeit aufweisen. Diese unterschiedliche Nahtfestigkeit kann beispielsweise über eine unterschiedlich breite Klebung und/oder Siegelung und/oder Nähung realisiert sein. Darüber hinaus können auch unterschiedlich feste Kleber, Siegelmaterialien oder Garne verwendet sein. Die jeweiligen Verbindungsarten können auch in Kombination miteinander und in Ergänzung zueinander verwendet sein.

Darüber hinaus kann die Naht wenigstens einen Schwächungsabschnitt aufweisen, der als Sollbruchstelle für die Naht dient. Ein solcher Schwächungsabschnitt kann beispielsweise in Form einer zu einer Spitze zulaufenden Naht ausgebildet sein, die während des Befüllvorgangs des Gassacks in den Bereich des höheren Drucks hineinragt, und bei Erreichen eines bestimmten Mindestdrucks aufpeelt und/oder aufreißt. Durch die Vorsehung eines solchen Schwächungsabschnitts kann ein Aufbrechen der Naht in vorteilhafter Weise exakt gesteuert werden, wobei es beispielsweise möglich ist, die Stelle oder die Stellen der Naht festzulegen, an welchen ein Aufbrechen der Naht initiiert wird und beginnt.

Gemäß einer weiteren bevorzugten Ausführungsform der Erfindung ist die Gasleitvorrichtung durch ein Schlauchsystem gebildet, das wenigstens eine Einlassöffnung und wenigstens eine Auslassöffnung aufweist, wobei die Einlassöffnung fluidtechnisch mit der wenigstens einen Gaszuführöffnung des Gassacks verbunden ist und die wenigstens eine Auslassöffnung in den primären Füllbereich der Kammer mündet. In vorteilhafter Weise ist es erfindungsgemäß möglich das Volumen des Gassacks, d.h. den oder die mehreren primären Füllbereich(e) sowie den oder die mehreren sekundären Füllbereich(e) durch das Schlauchsystem so mit dem Füllfluid, respektive Gas, zu beschicken, dass sich zunächst der oder die mehreren primäre(n) Füllbereich(e) mit dem Füllfluid füllen, da die Auslassöffnung des Schlauchsystems in den bzw. die jeweiligen primären Füllbereiche mündet und das Gas erst sodann über diese primären Füllbereiche in den bzw. die sekundäre(n) Füllbereich(e) des erfindungsgemäßen Gassacks strömt und diese füllt.

Erfindungsgemäß kann das Schlauchsystem, durch welches das Gas geleitet wird, im Wesentlichen vollständig gasdicht sein oder eine gewisse Durchlässigkeit für das einströmende Gas aufweisen, so das ein reduzierter Volumenstrom aus dem Schlauchsystem unmittelbar in den oder die oder gegebenenfalls ausgewählte sekundäre(n) Füllbereich(e) strömen kann, wobei der reduzierte Volumenstrom im Bereich von 1 % bis 20 %, bevorzugt im Bereich von 2 % bis 15 % und besonders bevorzugt im Bereich von 5 % bis 10 %, jeweils bezogen auf den Gesamtvolumenstrom des einströmenden Füllgases, liegt.

Auf diese Weise ist es möglich sowohl die primären Füllbereiche als auch die sekundären Füllbereiche dezidiert zur gewünschten Zeit mit der jeweils gewünschten Gasmenge zu füllen, so dass eine gezielte räumliche als auch zeitliche Füllung des Gassacks stattfindet.

Des Weiteren kann das Schlauchsystem eine Schwachstelle, beispielsweise in Form einer Naht, die als Siegelnaht und/oder als Klebenaht und/oder als Näh-Naht ausgebildet sein kann, aufweisen, so dass das Schlauchsystem an einer oder an mehreren Stellen oder auch im Wesentlichen vollständig birst, wenn ein bestimmter Füllzustand des Gassacks vorliegt. Ein solcher Füllzustand des Gassacks kann beispielsweise über einen vordefinierten Druck, der in dem primären Füllbereich und/oder in dem sekundären Füllbereich und/oder in dem Schlauchsystem vorliegt, definiert sein. Es sei an dieser Stelle erwähnt, dass auch die Gassackwandung selbst als Teil des Schlauchsystems ausgeführt sein kann und beispielsweise einen Teil der Wandung des Schlauchsystems bilden kann.

Das Schlauchsystem kann im Übrigen entlang der Innenwandung des Gassacks geführt und/oder an dieser Innenwandung, gegebenenfalls mittels Abstandshaltern befestigt sein.

Gemäß einer weiteren Ausführungsform der Erfindung besteht der Abstandshalter, insbesondere das Abstandsband, und/oder das Schlauchsystem im Wesentlichen aus demselben Material wie der Gassack.

Des Weiteren wird die erfindungsgemäße Aufgabe auch durch die Verwendung eines Gassacks für ein Airbag-System, insbesondere ein Seitenvorhang-Airbag-System, gemäß den vorstehenden Ausführungen gelöst.

Ferner wird die erfindungsgemäße Aufgabe auch durch ein Verfahren zum Füllen eines Gassacks gelöst, wobei Gas ausgehend von einer Gaszuführöffnung unter Verwendung einer Gasleitvorrichtung gemäß vorstehenden Ausführungen in den Gassack eingeleitet wird, wobei vor einer Beschickung eines sekundären Füllbereichs zunächst ein primärer Füllbereich zumindest teilweise oder im Wesentlichen vollständig mit Gas befüllt wird.

Im Zuge der Beschickung des sekundären Füllbereichs mit Gas wird erfindungsgemäß wenigstens eine Trennvorrichtung, insbesondere wenigstens eine Naht, zwischen dem primären Füllbereich und dem sekundären Füllbereich der Kammer aufgebrochen. Die Trennung wird hierbei im Wesentlichen soweit aufgebrochen, dass der Gassackinnenraum in entfaltetem, d.h. in im Wesentlichen vollständig gefüllten, Zustand des Gassacks eine einzige Kammer definiert.

Des Weiteren wird die erfindungsgemäße Aufgabe auch durch ein Fahrzeugsicherheitssystem gelöst, das mit einem Gassack gemäß vorstehenden Ausführungen ausgerüstet ist und mit vorbeschriebenem Verfahren zum Füllen eines solchen Gassacks mit Gas beschickt wird. Ein solches Fahrzeugsicherheitssystem weist zumindest eine Sensoreinheit zum Erfassen von Daten sowie eine elektronische Entscheidungseinheit auf, die geeignet ist, unter Einbeziehung der von der Sensoreinheit erfaßten Daten das Vorliegen eines Auslösefalles für das Gassackmodul zu definieren und/ oder ein Auslösesignal an das Gassackmodul zu senden.

Zusammenfassend offenbart die Erfindung einen Vorhang-Airbag mit einem Thorax-Schutz, wobei der Airbag ein spezifisches erfindungsgemäßes Gassack-Design für eine schnellere, zielgerichtetere und zeitlich optimierte Entfaltung aufweist, um den Gassack zur Gewährleistung eines optimierten Insassenschutzes, insbesondere bei einem Seitenaufprall, optimal zu positionieren. Der wesentliche Aspekt der Erfindung besteht darin, dass der Seitenvorhang-Airbag mit Thorax-Schutz so entfaltet wird, dass das aus dem Treibsatz sowie gegebenenfalls einem Gasvorratssystem entweichende Gas zunächst in den für den Thorax-Schutz wesentlichen, nämlich in den im Einbauzustand, respektive entfaltetem Zustand, unteren, Teil des Gassacks geleitet wird. Dies wird gemäß einer Ausführungsform der Erfindung anhand von einer Naht oder mehreren Nähten und/oder einem Schlauchsystem erreicht, die in dem Gassack integriert angeordnet sind und als Gasleitvorrichtung dient/dienen. Die Naht, respektive die mehreren Nähte, ist/sind hinsichtlich ihrer Festigkeit so gestaltet, dass sie bei einem vorbestimmten Grad der Entfaltung bzw. des Entfaltungsvolumens des Gassacks im Thorax-Bereich aufreißen, so dass sich das Gas durch die Bruchstelle(n) der Naht auch in das verbleibende, im Wesentlichen nicht dem Thorax-Bereich des Gassacks zugeordnete, Volumen des Gassacks ausbreiten und den Gassack somit im Wesentlichen vollständig füllen kann. Dieses erfindungsgemäße Konzept kann für Airbags angewendet werden, die einen Thorax-Schutz für eine oder mehrere Fahrgastreihen aufweisen. Erfindungsgemäß eignet sich der neuentwickelte Gassack speziell für Fahrzeuge, die bis zu drei Sitzreihen aufweisen, wobei sich der Gassack gemäß einer Ausführungsform der Erfindung über alle drei Sitzreihen erstrecken kann. In diesem Fall hat es sich als vorteilhaft erwiesen, wenn die Befüllung des Gassacks in Bezug auf die Längserstreckung des Gassacks im Wesentlichen mittig erfolgt, d.h. ein Gasgenerator im Wesentlichen mittig der Längserstreckung des Gassacks angeordnet ist. Alternativ kann sich der erfindungsgemäße Gassack auch über zwei Fahrgastreihen erstrecken. Darüber hinaus ist es erfindungsgemäß möglich für jede Sitzreihe einen einzelnen Gassack zu verwenden, der somit beispielsweise auch in Fahrzeugen mit zwei, drei und mehr Sitzreihen, wie beispielsweise einem Bus, verwendet werden kann. Insbesondere eignet sich das erfindungsgemäße Konzept für Airbags, die sich über eine oder zwei Fahrgastreihen erstrecken. In diesem Fall wird erfindungsgemäß das kombinierte Design eines erfindungsgemäßen Gassacks bevorzugt, der sich über die vordere und die hintere Sitzreihe gemeinsam erstreckt. In diesem Fall kann der Gasgenerator entweder in der A-Säule, der B-Säule oder der C-Säule des Kraftfahrzeugs angeordnet sein. Gemäß einer alternativen Ausführungsform ist die Verwendung einzelner Gassäcke zum Schutz der Passagiere in der vorderen und der hinteren Sitzreihe erfindungsgemäß möglich. Sofern der Vorhangairbag zum Schutz der hinteren Passagiere eines Kraftfahrzeugs vorgesehen ist, kann der Gasgenerator beispielsweise in der C-Säule des Kraftfahrzeugs angeordnet sein. Des Weiteren kann der Gasgenerator/Treibsatz, der gemeinsam mit dem neuartigen erfindungsgemäßen Gassack verwendet wird, auch in einem Winkel, beispielsweise in einem Winkel von vorzugsweise 90°, zur Entfaltungsebene des Vorhangairbags, d.h. beispielsweise in einer Dachebene eines Kraftfahrzeugs, angeordnet sein. Somit eignet sich das erfindungsgemäße neuartige Airbag-System besonders für herkömmliche Limousinen oder Kombis mit ein oder zwei Sitzreihen, jedoch insbesondere auch für MPVs, MiniVans, Vans, Pick-Ups und Busse sowie LKWs.

Mithilfe des erfindungsgemäßen Airbag-, respektive Gassack-Designs, ist es mit allen im Rahmen dieser Erfindung vorgestellten Varianten möglich, bisherige Probleme bei der Entfaltung von Vorhang Airbag-Systemen mit Thorax-Schutz zu beheben, bei welchen die Verteilung des Gases während der Entfaltung ungerichtet, ausgehend von dem Gasgenerator erfolgte. Des Weiteren hat das erfindungsgemäße Airbag-, respektive Gassack-Design, gegenüber bisherigen Ein- und Zweikammer-Systemen für Vorhangairbags, die bislang genutzt wurden, um zumindest einen gewissen Thorax-Schutz zur Verfügung zu stellen, den wichtigen und wesentlichen Vorteil, dass sich die Entfaltung des erfindungsgemäßen Gassacks gegenüber diesen bisherigen Ein- und Zweikammer-Systemen wesentlich besser steuern lässt, so dass ein mit einem solchen erfindungsgemäßen Gassack ausgestattetes Airbag-System in einem Fahrzeugsicherheitssystem im Falle eines Crashs einen gegenüber herkömmlichen Airbag-Systemen deutlich verbesserten Schutz für Fahrzeuginsassen bietet.

Die erfindungsgemäße Lösung beruht hierbei darauf, dass das aus dem Gasgenerator, respektive Treibsatz, entströmende Gas zunächst direkt in den Thorax-Bereich des erfindungsgemäßen Gassacks strömt, bis dieser Thorax-Bereich einen gewissen vorbestimmten Entfaltungsgrad aufweist. Zu diesem Zeitpunkt ist der Thorax-Bereich eines Fahrzeuginsassen somit extrem schnell geschützt. Nachdem der Thorax-Bereich des Gassacks einen vorbestimmten Entfaltungsgrad erlangt hat, reißt/reißen die mit Sollbruchstellen versehene(n) Naht/Nähte auf und die übrigen Bereiche des Volumens des Gassacks füllen sich Schritt für Schritt in kontrollierter Weise mit Füllgas.

Somit kann mit dem erfindungsgemäßen Gassack-Design exakt definiert werden, welche Bereiche des Gassacks in welcher zeitlichen und räumlichen Reihenfolge mit Füllgas beschickt werden.

Gemäß einer weiteren erfindungsgemäßen Variante kann die Gasleitvorrichtung nicht nur in Form einer Naht oder mehrerer Nähte, die innerhalb des Gassacks platziert sind, ausgebildet sein, sondern eine solche Gasleitvorrichtung kann, wie vorerwähnt, auch als ein Schlauchsystem vorliegen, das sich innerhalb des Gassacks erstreckt und zur Verteilung des Füllgases in dem Gassack dient. Das Schlauchsystem ist zu diesem Zweck einerseits mit einer Gaszufuhreinrichtung, wie beispielsweise einem Gasgenerator, verbunden und erstreckt sich andererseits mit zumindest einem offenen Ende in einen für den Thorax-Schutz vorgesehenen Abschnitt des Gassacks. Das Schlauchsystem kann zu diesem Zweck Verzweigungen aufweisen, beispielsweise um die jeweiligen Gassackbereiche für Seitenvorhang-Airbag-System zu füllen, die für mehrere Fahrgastreihen vorgesehen sind, oder um mehrere primäre Füllbereiche in einem Abschnitt des Gassacks zu füllen, die nur einer Sitzreihe zugeordnet sind. In diesem Zusammenhang ist es auch möglich einen primären Füllbereichs des erfindungsgemäßen Gassacks von zwei, sich beispielsweise gegenüberliegenden, Gassackabschnitten mit Füllgas zu beschicken. Ebenso ist es erfindungsgemäß vorgesehen, dass in einem erfindungsgemäßen Gassack zwei primäre Füllbereiche vorgesehen sind, von welchen einer den Thorax schützt und ein zweiter den Kopfbereich schützt.

Des Weiteren kann das Schlauchsystem so ausgebildet sein, dass das Füllgas durch den Schlauch zunächst in die jeweiligen für den Thorax-Schutz vorgesehenen Abschnitte des Gassacks geleitet wird und sich sodann von diesen Abschnitten ausgehend in das übrige Volumen des Gassacks ausdehnt. Gemäß einer erfindungsgemäßen Variante eines solchen Schlauchsystems kann dieses auch so ausgebildet sein, dass der Gasleitschlauch bei einer gewissen Entfaltung des Gassacks an einer oder an mehreren Stellen aufreißt, so das Gas aus dem Gasleitschlauch austreten und das übrige Gassackvolumen füllen kann. Eine Begrenzung des Gasleitschlauchs kann beispielsweise durch eine oder mehrere Naht/Nähte gebildet sein, die sich dadurch ergibt/ergeben, dass Innenwände des Gassacks im Sinne einer Gasleitvorrichtung miteinander verbunden sind. Diese Naht kann vordefinierte Nahteigenschaften aufweisen und so ausgeführt sein, dass sie bei einem vordefinierten Aufblas-, respektive Entfaltungsvolumen des Gassacks birst.

Ein erfindungsgemäßer Airbag kann somit nicht nur in dezidierter Weise von unten nach oben, d.h. in vertikaler Richtung, befüllt werden, sondern auch von vorne nach hinten, d.h. in horizontaler Richtung, so dass, je nach Wunsch eine Rückenpartie eines Fahrzeuginsassen oder eine Bauchpartie des Fahrzeuginsassen in gezielter Weise primär, d.h. schneller oder sekundär, d.h. nachrangig, geschützt werden. Diesbezüglich kann der erfindungsgemäße Airbag für ein jeweiliges Fahrzeug und dessen Fahrer unter Berücksichtigung von dessen Statur speziell kombiniert ausgesucht und in das Fahrzeug eingebaut werden.

Des Weiteren betrifft die Erfindung einen Aspekt einer Verwendung eines Gassacks gemäß vorstehenden Ausführungen für ein Airbag-System, insbesondere ein Seitenvorhang-Airbag-System, sowie einen Verfahrensaspekt zum Füllen eines Gassacks, wobei Gas ausgehend von einer Gaszuführöffnung unter Verwendung einer Gasleitvorrichtung gemäß vorstehenden Ausführungen in den Gassack eingeleitet wird, wobei vor einer Beschickung eines sekundären Füllbereichs zunächst ein oder mehrere primäre(r) Füllbereich(e) im Wesentlichen vollständig mit Gas befüllt wird/werden.

Gemäß einer Ausführungsform des Verfahrens wird im Zuge der Beschickung des sekundären Füllbereichs mit Gas wenigstens eine Trennung, insbesondere wenigstens eine Naht und/oder ein Schlauch, zwischen dem primären Füllbereich und dem sekundären Füllbereich der Kammer aufgebrochen.

Erfindungsgemäß wird die Trennung soweit aufgebrochen wird, dass der Gassackinnenraum im entfalteten, d.h. in im Wesentlichen vollständig gefüllten, Zustand des Gassacks eine einzige Kammer definiert.

Die Vorteile des erfindungsgemäßen Gassacks, respektive Airbag-Systems lassen sich somit wie folgt zusammenfassen. Anhand des erfindungsgemäßen Airbag-Designs ist es möglich einen Ein-, Zwei- oder Mehrreihen-Airbag sehr schnell so zu füllen, dass der Thoraxbereich eines Fahrzeuginsassen extrem schnell geschützt wird. Die Entfaltung des erfindungsgemäßen Airbags ist hierbei gegenüber aus dem Stand der Technik bekannten Airbags zielgerichteter und zwar sowohl in zeitlicher als auch räumlicher Hinsicht. Aufgrund der Ausbildung des erfindungsgemäßen Airbags als Ein-Kammer-System ist sowohl die Entfaltung als auch die Befüllung des erfindungsgemäßen Gassacks gegenüber bisher bekannten Gassäcken optimiert. Sofern der erfindungsgemäße Gassack als Ein-Reihen-Gassack ausgebildet ist, ist es darüber hinaus möglich beliebig viele dieser Gassäcke, beispielsweise in einem Bus, hintereinander zu positionieren, wobei jeder dieser Gassäcke die erfindungsgemäßen Vorteile aufweist. Hierzu zählen unter anderem die Möglichkeit einen kleinen Gasgenerator zu verwenden, was zu einem geringeren Gewicht des Airbagsystems führt. Dies ist insbesondere im Hinblick auf bisherige Vorhangairbag-Systeme von Vorteil, die für einen Thorax Schutz einen zweiten Airbag benötigten.

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden. Hierbei zeigen:
Fig. 1a bis 1d Airbag-Systeme gemäß dem Stand der Technik in schematischer Darstellung;
Fig. 2 eine erste Ausführungsform eines erfindungsgemäßen Gassacks in schematischer Schnittansicht;
Fig. 3 eine zweite Ausführungsform eines erfindungsgemäßen Gassacks in schematischer Schnittansicht;
Fig. 4 eine dritte Ausführungsform eines erfindungsgemäßen Gassacks in schematischer Schnittansicht;
Fig. 5 eine vierte Ausführungsform eines erfindungsgemäßen Gassacks in schematischer Schnittansicht;
Fig. 6 eine fünfte Ausführungsform eines erfindungsgemäßen Gassacks in schematischer Schnittansicht;
Fig. 7a bis 7f eine schematische Darstellung eines erfindungsgemäßen Gassacks in Schnittansicht mit unterschiedlich angeordneten Gaszuführöffnungen und Gasgeneratoren gemäß einer weiteren erfindungsgemäßen Ausführungsform;
Fig. 8a bis 8f eine schematische Darstellung eines erfindungsgemäßen Gassacks in Schnittansicht mit unterschiedlich angeordneten Gaszuführöffnungen und Gasgeneratoren gemäß einer weiteren erfindungsgemäßen Ausführungsform;
Fig. 9a bis 9f eine schematische Darstellung eines erfindungsgemäßen Gassacks in Schnittansicht mit unterschiedlich angeordneten Gaszuführöffnungen und Gasgeneratoren gemäß einer weiteren erfindungsgemäßen Ausführungsform; und
Fig. 10a bis 10f eine schematische Darstellung eines erfindungsgemäßen Gassacks in Schnittansicht mit unterschiedlich angeordneten Gaszuführöffnungen und Gasgeneratoren gemäß einer weiteren erfindungsgemäßen Ausführungsform.

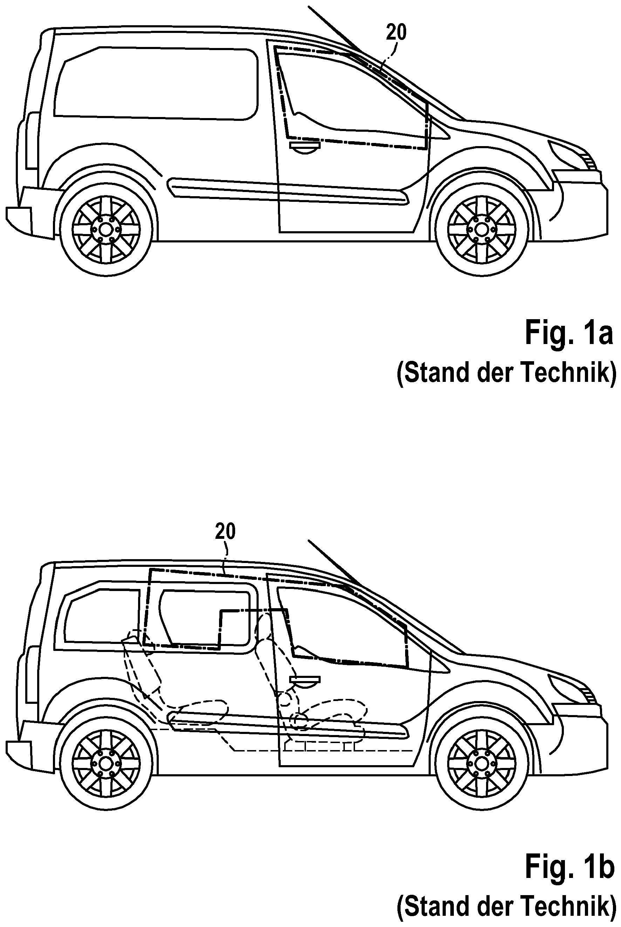

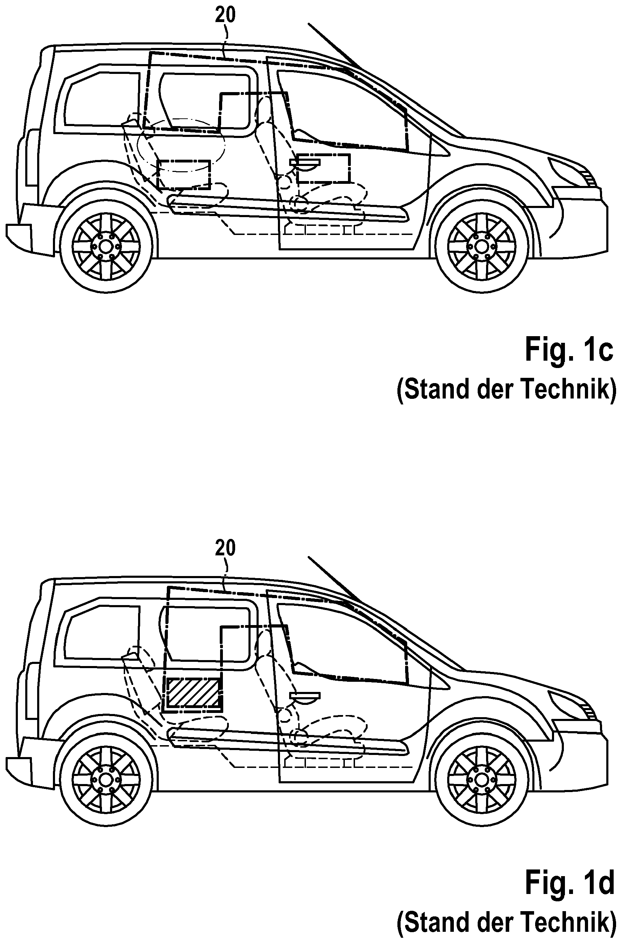

Die Fig. 1a bis Fig. 1d zeigen aus dem Stand der Technik bekannte Airbag-Systeme 20, die keinen oder einen, insbesondere für Kinder, unzureichenden Thorax-Schutz bieten. Das Airbag-System 20 gemäß Fig. 1a ist hierbei lediglich für die jeweiligen Frontsitze ausgelegt, während das Airbag-System 20 gemäß Fig. 1b sich über die hintere und vordere Sitzreihe erstreckt, wobei jedoch in beiden Fällen kein Thorax-Schutz gewährleistet ist, da sich diese Seitenvorhang-Airbag-Systeme 20 nicht ausreichend weit nach unten erstrecken. Selbiges gilt auch für das Seitenvorhang-Airbag-System 20 gemäß Fig. 1c, das zwar für die hintere und vordere Sitzreihe jeweils einen kleinen separaten Airbag aufweist, der einen Schutz für die Hüfte und Oberschenkel bietet, allerdings wiederum keinen Thorax-Schutz gewährleistet. Das aus dem Stand der Technik bekannte Seitenvorhang-Airbag-System 20 gemäß Fig. 1d bietet zwar für die rückwärtigen Sitze einen Thorax-Schutz, wobei der für die rückwärtigen Sitze vorgesehene Teil des dortigen Airbag-Systems 20 ein 2-Kammer-System aufweist; allerdings weist auch diese Seitenvorhang-Airbag-System 20 für die jeweiligen Frontsitze keinen Thorax-Schutz auf.

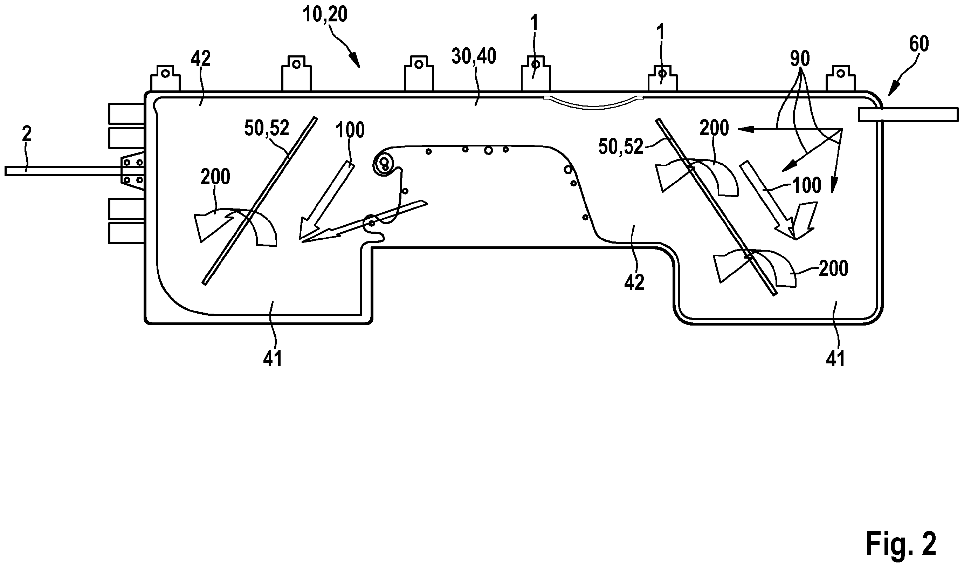

Fig. 2 zeigt eine erste Ausführungsform eines erfindungsgemäßen Gassacks 10 in schematischer Schnittansicht. Der Gassack 10 umfasst einen Gassackinnenraum 30 mit einer Kammer 40, die von einer Gasleitvorrichtung 50, die als Naht 52 ausgebildet ist, in einen primären Füllbereich 41 und einen sekundären Füllbereich 42 unterteilt ist. Der Gassack 10 weist eine Gaszuführöffnung 60 auf, die mit einem Gasgenerator oder einer sonstigen Gaszufuhreinrichtung verbunden ist. Durch diese Gaszuführöffnung 60 strömt im Betriebszustand des Gassacks 10 ein Füllgas in den Gassackinnenraum 30 und breitet sich entlang der initialen Gaseinströmungrichtung 90 zunächst ungerichtet in den Gassackinnenraum 30 aus, wird jedoch sofort im Anschluss von der Gasleitvorrichtung 50, die als Naht 52 ausgebildet ist, entlang der primären Gasflussrichtung 100, die als dicker gerader Pfeil dargestellt ist, in den primären Füllbereich 41 geleitet. Dieser primäre Füllbereich 41 entfaltet sich erfindungsgemäß bis zu einem vordefinierten Maß, wobei bei Erreichen dieses Maßes und eines damit einhergehenden vordefinierten Entfaltungsvolumens ein Bersten der Naht 52 initiiert wird, die sodann zumindest teilweise oder vollständig aufreißt und eine sekundäre Gasflussrichtung 200, die als dicker geschwungener Pfeil dargestellt ist, ermöglicht, entlang derer die sekundären Füllbereiche 42 des Gassacks 10 gefüllt werden. Somit wird der erfindungsgemäße Gassack 10 gemäß Fig. 2 zunächst in seinem in der Abbildung unten dargestellten primären Füllbereich 41 gefüllt. Dieser primäre Füllbereich 41 dient im Wesentlichen dem Schutz eines Brustkorbbereichs eines Fahrzeuginsassen, kann sich jedoch auch bis in den Hüft- bzw. Oberschenkelbereich fortsetzen, sofern dies gewünscht ist. Wie in Fig. 2 zu erkennen ist, ist der dortige Gassack für zwei Sitzreihen ausgebildet, wobei die Gaszuführöffnung 60 und der Gasgenerator im rückwärtigen Teil des Gassacks 10 angeordnet und in der C-Säule des Kraftfahrzeugs untergebracht ist.

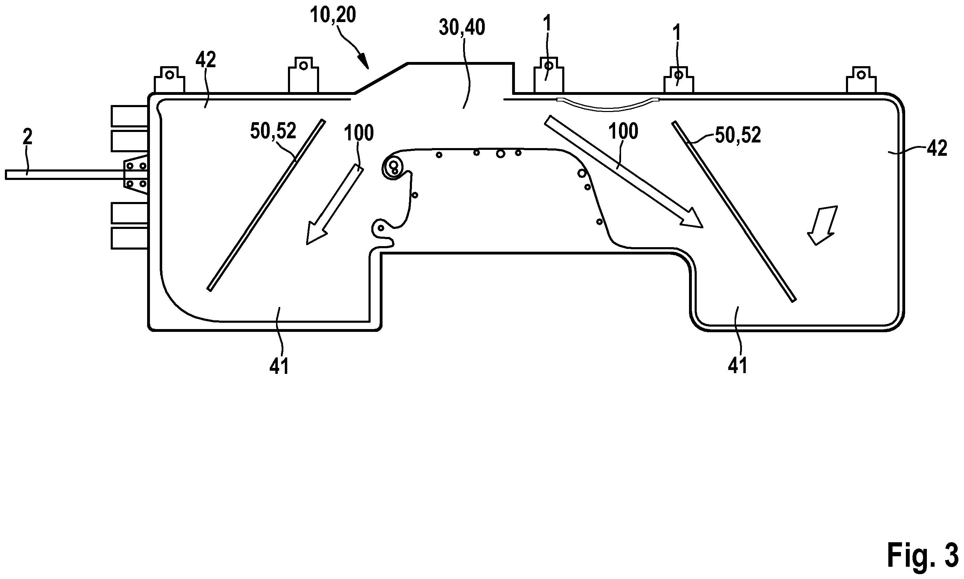

Fig. 3 zeigt eine zweite Ausführungsform eines erfindungsgemäßen Gassacks 10 in schematischer Schnittansicht, die im Wesentlichen der in Fig. 2 dargestellten Ausführungsform entspricht, mit dem Unterschied, dass der Gassack 10 gemäß Fig. 3 nicht von hinten, d.h. ausgehend von der C-Säule des Kraftfahrzeugs, mit Füllgas befüllt wird, sondern zentral, d.h. ausgehend von der B-Säule des Kraftfahrzeugs. Diese Ausführungsform hat den Vorteil, dass Füllgas aufgrund eines Gaseintritts im zentralen Bereich des Gassacks 10 gleichmäßig in den, der vorderen und der hinteren Sitzreihe zugeordneten, Abschnitt des Gassacks 10 strömen kann. Auch gemäß Fig. 3 strömt das Füllgas zunächst entlang einer primären Gasflussrichtung 100 zunächst in einen primären Füllbereich 41 des Gassackinnenraums 30, der wiederum und in Entsprechung zu Fig. 2 als eine einzige Kammer ausgebildet ist, und erst nach einem Bersten der als Naht 52 ausgebildeten Gasleitvorrichtung 50 in den sekundären Füllbereich 42.

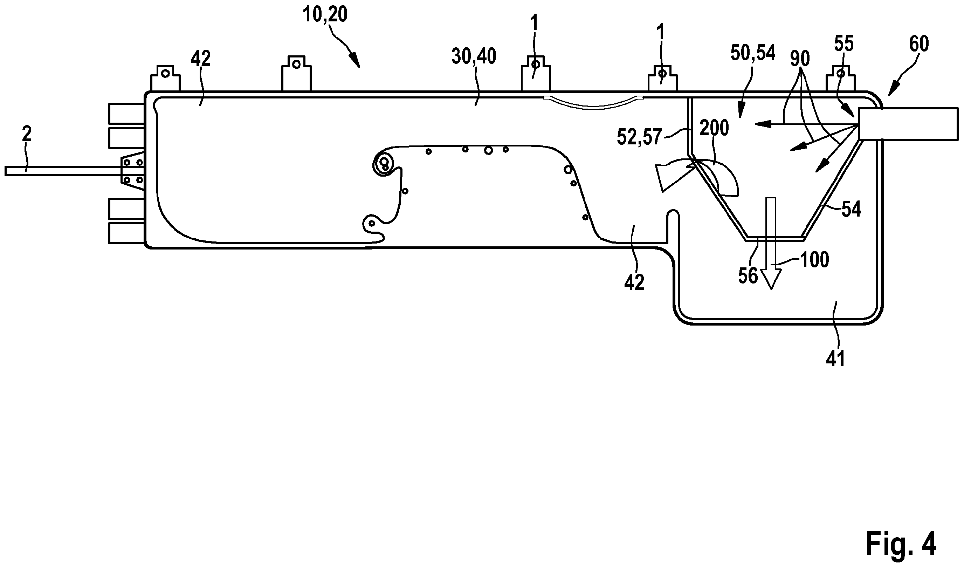

Fig. 4 zeigt eine dritte Ausführungsform eines erfindungsgemäßen Gassacks 10 in schematischer Schnittansicht, wobei die Gaszuführöffnung 60 wiederum im hinteren Bereich des Gassacks 10 angeordnet ist. Es sei an dieser Stelle betont, dass die Gaszuführöffnung 60 grundsätzlich nicht nur im hinteren Bereich des Gassacks 10, respektive im mittleren Bereich des Gassacks 10, sondern prinzipiell auch im vorderen Bereich des Gassacks 10 angeordnet sein kann, nämlich dann, wenn der Gasgenerator, respektive die Gaszufuhreinrichtung, nicht in der C-Säule oder der B-Säule, sondern in der A-Säule des Kraftfahrzeugs vorgesehen sein soll. Grundsätzlich ist es ebenso möglich den Gasgenerator im Dachbereich des Kraftfahrzeugs unterzubringen und eine Gaszuführöffnung 60 an dem erfindungsgemäßen Gassack entsprechend der gewünschten Anordnung des Gasgenerators auszubilden.

Gemäß Fig. 4 strömt das Füllgas entlang einer initialen Gaseinströmrichtung 90 durch die Gaszuführöffnung 60 in den Gassackinnenraum 30, der als eine einzige Kammer 40 ausgebildet ist. Das Gas tritt hierbei zunächst in ein Schlauchsystem 54 ein, das dadurch gebildet ist, dass einerseits ein an der Einlassöffnung 55 für das Füllgas fest angeordneter Schlauchabschnitt des Schlauchsystems 54 vorgesehen ist, der mit einer Naht 52 zusammenwirkt, welche die Wandinnenseiten der Kammer 40 des Gassackinnenraums 30 miteinander verbindet. Aus der Zusammenwirkung des Schlauchabschnitts und der Naht 52 ergibt sich ein Schlauchsystem 54, dass an seinem unteren Ende eine Auslassöffnung 56 aufweist, durch die bei einem Befüllen des Seitenvorhang-Airbag-Systems 20 das Füllgas entlang einer primären Gasflussrichtung 100 in den primären Füllbereich 41 des Gassacks 10 strömen kann. Nachdem der primäre Füllbereich 41 des Gassacks 10 sich bis zu einem vordefinierten Maß aufgeweitet und entfaltet hat, birst die Naht 52 entlang der Sollbruchstelle 57 und ermöglicht ein Einströmen des Füllgases entlang der sekundären Gasflussrichtung 200 in den sekundären Füllbereich 42 des Gassacks 10.

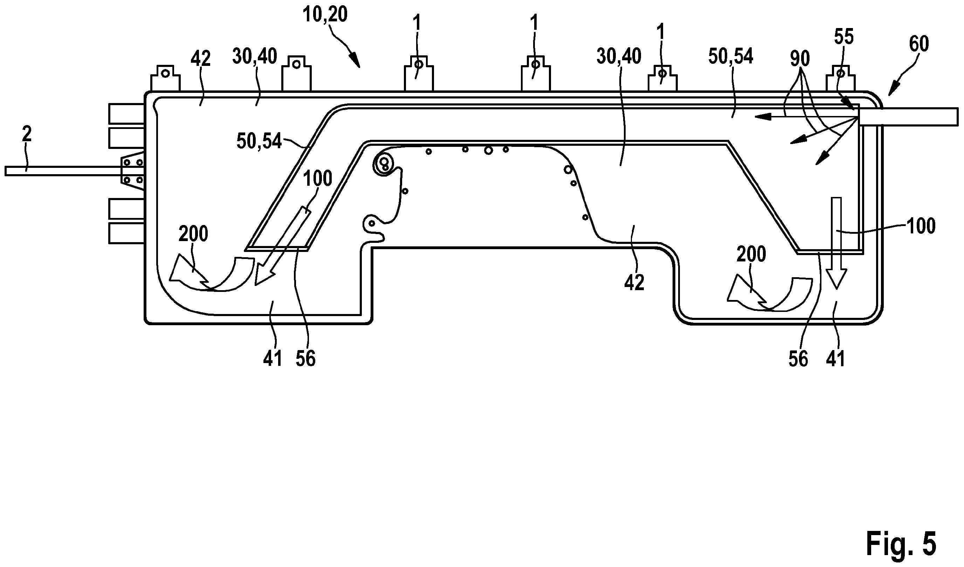

Fig. 5 zeigt eine vierte Ausführungsform eines erfindungsgemäßen Gassacks 10 in schematischer Schnittansicht, wobei wiederum im rückwärtigen Teil des Gassacks 10 eine Gaszuführöffnung 60 vorgesehen ist, die an einen Gasgenerator angeschlossen ist. Durch die Gaszuführöffnung 60 strömt Gas entlang einer initialen Gaseinströmrichtung 90 durch eine Einlassöffnung 55 in ein Schlauchsystem 54, das sich im Innenraum 30 des Gassacks 10 erstreckt. Der Gassack 10 gemäß Fig. 5 ist als Zwei-Sitzreihen-Gassack ausgebildet. Das Schlauchsystem 54 erstreckt sich gemäß Fig. 5 ausgehend von der Einlassöffnung 55 in den jeweiligen Thorax-Schutzbereich für die vordere und für die hintere Sitzreihe und hat dort jeweils eine Auslassöffnung 56, durch welche das Füllgas entlang einer primären Gasflussrichtung 100 in den jeweiligen primären Füllbereich 41 strömen kann. Nach einem Austritt des Füllgases aus der jeweiligen Auslassöffnung 56 breitet sich das Füllgas zunächst im primären Füllbereich 41 aus und strömt von dort ausgehend anschließend in den sekundären Füllbereich 42 des Seitenvorhang-Airbag-Systems 20.

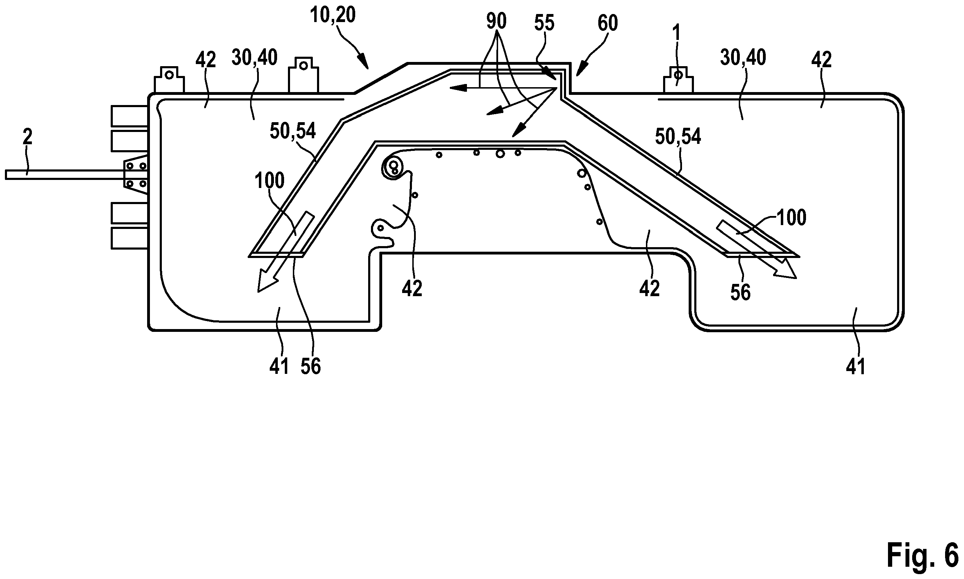

Fig. 6 zeigt eine weitere, d.h. 5. fünfte Ausführungsform eines erfindungsgemäßen Gassacks 10 in schematischer Schnittansicht, wobei ein Schlauchsystem 54 vorgesehen ist, durch welches Füllgas von einer Einlassöffnung 55 zu zwei jeweiligen Auslassöffnungen 56 in den jeweiligen primären Füllbereichen 41 des Gassacks 10 geleitet wird, die einem jeweiligen Thorax-Schutzbereich für eine vordere und eine hintere Sitzreihe des Seitenvorhang-Airbag-System 20 zugeordnet sind. Auch hier strömt das Füllgas zunächst durch die Auslassöffnungen 56 in den jeweiligen primären Füllbereich 41 und erst anschließend, d.h. erst nachdem der primäre Füllbereich 41 zumindest teilweise gefüllt ist, in den sekundären Füllbereich 42 des Gassacks 10.

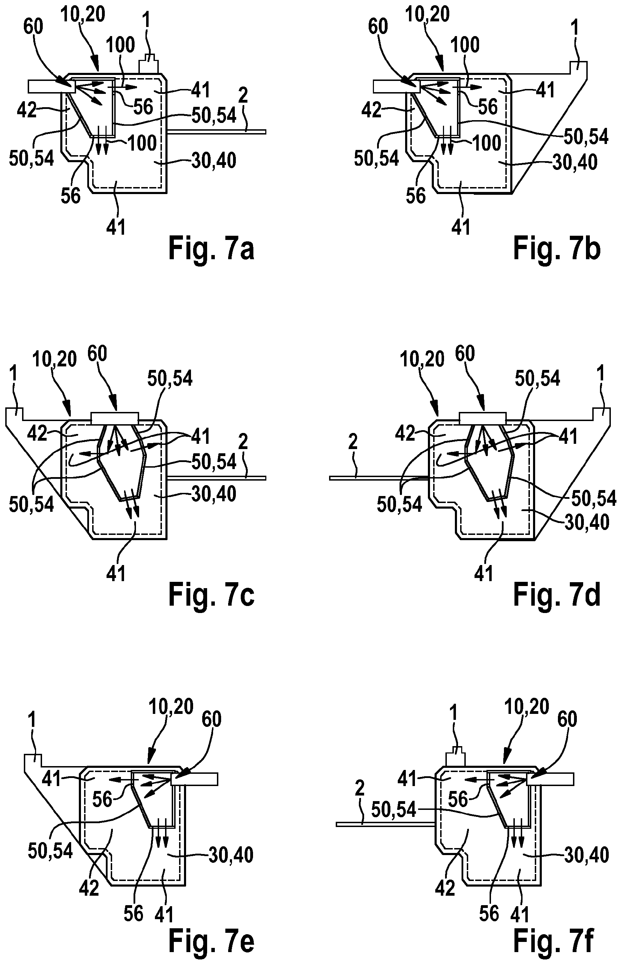

Die in den Fig. 7a bis 10f schematisch dargestellten Gassäcke 10 sind jeweils als Ein-Reihen-Gassäcke 10 ausgebildet, wobei sich die jeweiligen Abbildungen unter anderem darin unterscheiden, dass die schematisch dargestellten Gassäcke 10, die in den Abbildungen mit a und b bezeichnet sind, eine Gaszuführöffnung 60 aufweisen, die in Fahrt-und Einbaurichtung vorne ausgebildet bzw. angeordnet ist, während die Gassäcke 10, die mit den Buchstaben c und d bezeichnet sind, eine Gaszuführöffnung 60 aufweisen, die in Fahrt-und Einbaurichtung mittig ausgebildet bzw. angeordnet ist, und die Gassäcke 10, die mit den Buchstaben e und f bezeichnet sind, eine Gaszuführöffnung 60 aufweisen, die in Fahrt-und Einbaurichtung rückseitig ausgebildet bzw. angeordnet ist. Den jeweiligen Gaszuführöffnungen 60 ist jeweils ein Gasgenerator zugeordnet.

Gemäß den Fig. 7a bis 10f strömt das Füllgas jeweils entlang einer initialen Gaseinströmrichtung 90 durch die Gaszuführöffnung 60 in den Gassackinnenraum 30, der als eine einzige Kammer 40 ausgebildet ist.

In den Fig. 7a bis 7f ist jeweils ein erfindungsgemäßer Gassack in jeweiliger schematischer Schnittansicht gezeigt, wobei ein Füllgas durch eine Gaszuführöffnung 60 in ein in dem Gassack 10 angeordnetes Schlauchsystem 54, das als Gasleitvorrichtung 50 dient, ein strömt. Das Schlauchsystem 54 weist gemäß den Fig. 7a, 7b, 7e und 7f zwei Auslassöffnungen 56 auf, durch welche das Füllgas im Betriebszustand, d.h. während eines Befüllvorgangs des Gassacks 10, zunächst in zwei primäre Füllbereich 41 strömt, die dem Thorax- sowie Kopfbereich zugeordnet sind, so das in einem Crashfall zunächst der Thorax- als auch der Kopfbereich eines Fahrzeuginsassen geschützt wird. Im Fall einer zentralen, d.h. mittigen, Befüllung des erfindungsgemäßen Gassacks 10, wie sie in den Fig. 7c und Fig. 7d schematisch dargestellt ist, weist das in dem Gassack 10 angeordnete Schlauchsystem 54 insgesamt drei Auslassöffnungen 56 auf, durch die das Füllgas zunächst in die primären Füllbereiche 41 des erfindungsgemäßen Gassacks 10 strömen kann. Eine Befüllung der sekundären Füllbereiche 42 findet erst dann statt, wenn das Füllgas entlang der primären Gasflussrichtung 100 in die primären Füllbereich 41 geströmt ist und sich dann von dort aus in die sekundären Füllbereiche 42 ergießt.

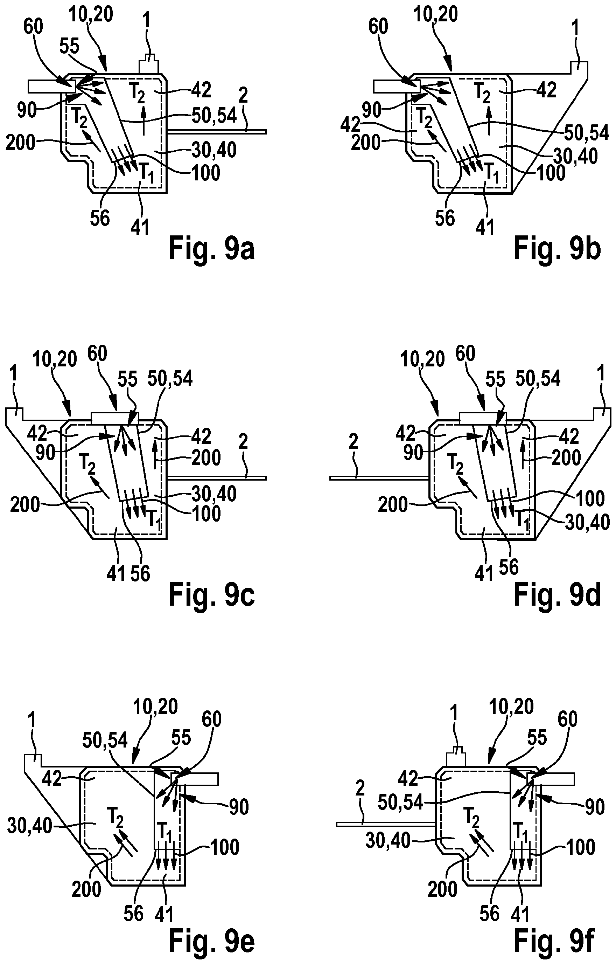

Die in den Fig. 9a bis 9f dargestellte Ausführungsform eines erfindungsgemäßen Gassacks unterscheidet sich von der in den Fig. 7a bis 7f dargestellten Ausführungsform im Wesentlichen dadurch, dass der erfindungsgemäße Gassack gemäß den Fig. 9a bis 9f ein Schlauchsystem 54 aufweist, dass nur eine einzige Auslassöffnung 56 aufweist, die dem primären Füllbereich 41 sowie dem Thoraxbereich zugeordnet ist. Gemäß dieser Ausführungsform strömt das Füllgas von der Gaszuführöffnung 60 in das Schlauchsystem 54 und verlässt dieses entlang einer primären Gasflussrichtung 100 durch die Auslassöffnung 56, wobei der erste Füllbereich 41 des Gassacks 10 aufgeblasen und dadurch entfaltet wird. Nachdem das Füllvolumen des Gassacks 10 im ersten Füllbereich 41 ein vordefinierte Maß erreicht hat, strömt das Füllgas entlang einer sekundären Gasflussrichtung 200 in den bzw. die sekundären Füllbereiche 42.

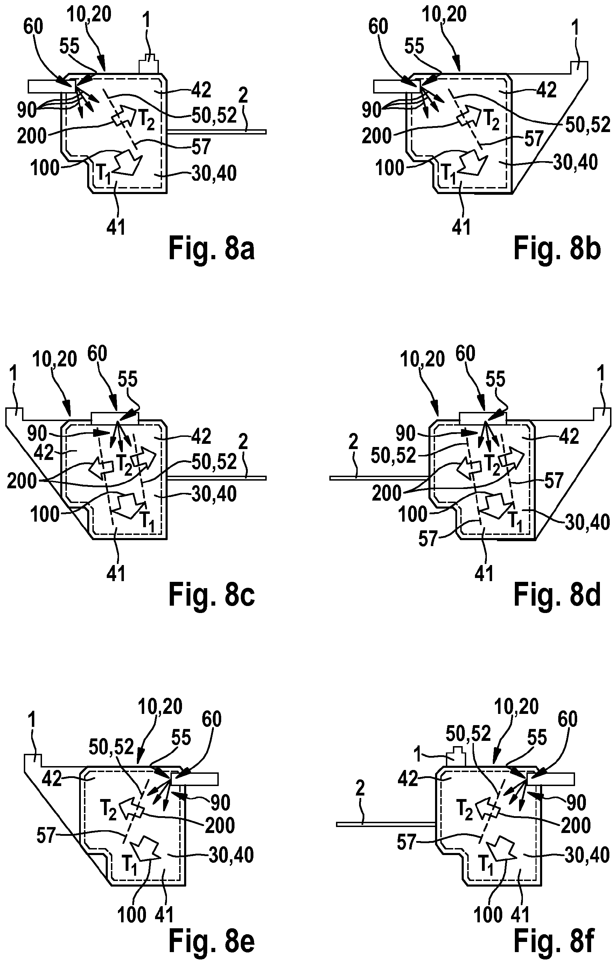

Gemäß den Fig. 8a bis 8f weist der erfindungsgemäße Gassack 10 eine Gasleitvorrichtung 50 auf, die im Falle einer front- oder rückseitigen Befüllung als eine Naht 52 und im Falle einer zentralen Befüllung als zwei einen Kanal definierende Nähte 52 ausgebildet ist. Entlang der Gasleitvorrichtung 50 wird das entströmende Füllgas entlang einer primären Gasflussrichtung 100 zunächst in den ersten Füllbereich 41 geleitet, bis dieser ein vorbestimmtes Füllvolumen sowie einen vorbestimmten Druck aufweist. Bei Erreichen dieses Füllvolumens und/oder des vorbestimmten Drucks reist die als Naht 52 ausgebildete Gasleitvorrichtung 50 auf, so dass das Füllgas entlang der sekundären Gasflussrichtung 200 in den sekundären Füllbereich 42 strömen kann. Somit wird erreicht, dass sich das aus der Gaszuführöffnung 60 zunächst entlang einer undefinierten initialen Gaseinströmrichtung 90 einströmende Füllgas in dem erfindungsgemäßen Gassacks 10 nicht, wie beim Stand der Technik bisher, ungerichtet und turbulent in dem Gassack 10 ausbreitet, sondern gerichtet entlang der Gasleitvorrichtung 50 zunächst in den primären Füllbereich 41 und erst dann in den sekundären Füllbereich 42 strömt. Wie in den Fig. 8a bis 8f durch die schraffiert dargestellte Naht 52 angedeutet ist, ist die Naht 52 erfindungsgemäß nicht vollkommen gasdicht ausgebildet, sondern erlaubt einen geringfügigen Gasdurchtritt, wenn das entströmende Füllgas entlang der Gasleitvorrichtung 50 strömt. Auf diese Weise kann sich der sekundäre Füllbereich 42 bereits vor dem Bersten der Naht 52 geringfügig Entfalten, was zum einen zu einer verbesserten Entfaltung des Vorhangairbags an sich sowie zu einem kontrollierten Aufblasen des sekundären Füllbereichs 42 nach einer Füllung des ersten Füllbereichs 41 beiträgt.

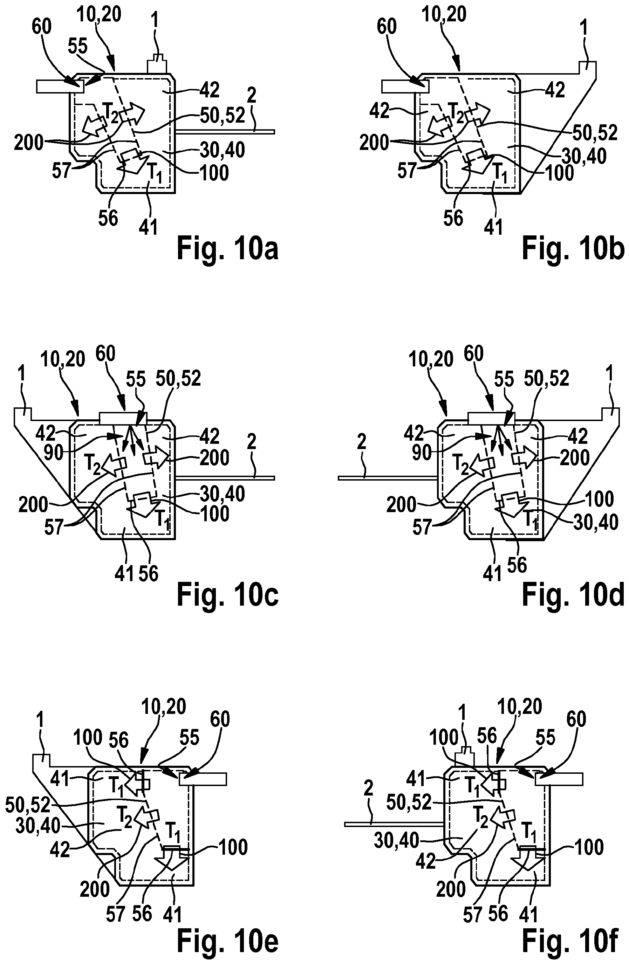

In den Fig. 10a bis 10f ist eine weitere Ausführungsform eines erfindungsgemäßen Gassacks 10 in schematischer Schnittansicht gezeigt, bei welcher das Füllgas aus der Gaszuführöffnung 60 kommend in ein Schlauchsystem 54 strömt, dass aus Nähten 52 gebildet ist, die bei einem vordefinierten Druck bersten können. Gemäß den in den Fig. 10a bis 10f dargestellten Ausführungsformen ist dargestellt, in welcher Weise sich ein Schlauchsystem 54 aus Nähten 52 bilden lässt, wobei das Schlauchsystem 54 ab einem bestimmten Füllvolumen des Gassacks 10, respektive von dessen primären Füllbereich, durch ein Bersten der Nähte 52 aufreißt, so dass das einströmende Füllgas sodann nicht nur entlang einer primären Gasflussrichtung 100 durch die Auslassöffnung 56 strömt, sondern sich auch durch die geborstenen Nähte 52 in den bzw. die die sekundären Füllbereich(e) 42 ergießt. Die jeweiligen Gasflussrichtungen sind in den Fig. 7a bis 10f durch jeweilige Pfeile schematisch angedeutet.

Die in den Figuren 2 bis 10f schematisch dargestellten, erfindungsgemäßen Gassäcke 10 sind jeweils mit Modulbefestigungen 1 sowie einem Band oder Gurt 2 versehen, die zur Anbringung der jeweiligen Gassäcke 10 an oder in einem Kraftfahrzeug dienen.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 1: Modulbefstigung
- 2: Band oder Gurt
- 10: Gassack
- 20: Seitenvorhang-Airbag-System
- 30: Gassackinnenraum
- 40: Kammer
- 41: primärer Füllbereich
- 42: sekundärer Füllbereich
- 50: Gasleitvorrichtung
- 52: Naht
- 54: Schlauchsystem
- 55: Einlassöffnung
- 56: Auslassöffnung
- 57: Sollbruchstelle
- 60: Gaszuführöffnung
- 90: initiale Gaseinströmrichtung
- 100: primäre Gasflussrichtung
- 200: sekundäre Gasflussrichtung

## Patentansprüche

1. Gassack (10) für ein Seitenvorhang-Airbag-System (20), mit einem Gassackinnenraum (30), der im entfalteten Zustand des Gassacks (10) eine einzige Kammer (40) definiert,
**dadurch gekennzeichnet, dass**
die Kammer (40) eine Gasleitvorrichtung (50) umfasst, durch welche die Kammer (40) in wenigstens einen primären Füllbereich (41) und in wenigstens einen sekundären Füllbereich (42) unterteilt wird,
und bei Zuführung von Gas in den Gassackinnenraum (30) das Gas entlang der Gasleitvorrichtung zunächst in den primären Füllbereich (41) geleitet wird und eine Zuführung von Gas in den sekundären Füllbereich (42) im Wesentlichen erst nach Erreichen eines bestimmten Primärfüllzustandes stattfindet,
wobei der räumlich entfernter von zumindest einer Gaszuführöffnung (60) angeordnete primäre Füllbereich (41) strömungstechnisch einen geringeren Abstand von der Gaszuführöffnung (60) hat, als der sekundäre Füllbereich (42), sodass bei einem Befüllen des Gassack (10) zunächst der primäre Füllbereich (41) mit Gas befüllt wird.

2. Gassack nach Anspruch 1,
**dadurch gekennzeichnet, dass**
zumindest ein primärer Füllbereich (41) räumlich weiter von der zumindest einen Gaszuführöffnung (60) entfernt ist als der/die sekundäre(n) Füllbereich(e) (42) von derselben zumindest einen Gaszuführöffnung (60).

3. Gassack nach einem der vorhergehenden Ansprüche,
**dadurch gekennzeichnet, dass**
die Gasleitvorrichtung (50) dadurch gebildet ist, dass wenigstens zwei einander zugeordnete Innenwandabschnitte des Gassacks (10), unmittelbar oder mittels eines Abstandhalters, insbesondere mittels eines Abstandbandes, vorzugsweise lösbar, miteinander verbunden sind.

4. Gassack nach Anspruch 3,
**dadurch gekennzeichnet, dass**
die einander zugeordneten Innenwandabschnitte des Gassacks (10) oder wenigstens eine Längsseite des Abstandsbandes mit dem dieser jeweiligen Längsseite des Abstandsbandes zugeordneten Innenwandabschnitt des Gassacks (10) mittels einer Naht (52) verbunden sind.

5. Gassack nach Anspruch 4,
**dadurch gekennzeichnet, dass**
die Naht (52) als Klebenaht und/oder als Siegelnaht und/oder als genähte Naht ausgebildet ist.

6. Gassack nach einem der vorhergehenden Ansprüche 4 bis 5,
**dadurch gekennzeichnet, dass**
die Klebe- und/oder Siegel- und/oder Näh-Naht (52) eine unterschiedliche Nahtfestigkeit aufweist.

7. Gassack nach Anspruch2,
**dadurch gekennzeichnet, dass**
die Gasleitvorrichtung (50) durch ein Schlauchsystem (54) gebildet ist, das wenigstens eine Einlassöffnung (55) und wenigstens einen Auslassöffnung (56) aufweist, wobei die Einlassöffnung (55) fluidtechnisch mit der Gaszuführöffnung (60) des Gassacks (10) verbunden ist und die wenigstens eine Auslassöffnung (56) in den oder die mehreren primären Füllbereich(e) (41) der Kammer (40) mündet.

8. Gassack nach einem der vorhergehenden Ansprüche 4 bis 7,
**dadurch gekennzeichnet, dass**
das Schlauchsystem (54) und/oder die Naht (52) wenigstens einen Schwächungsabschnitt, beispielsweise in Form einer Sollbruchstelle (57), aufweist/aufweisen.

9. Gassack nach einem der vorhergehenden Ansprüche 3 bis 7,
**dadurch gekennzeichnet, dass**
der Abstandhalter, insbesondere das Abstandband, und/oder das Schlauchsystem (54) aus demselben Material bestehen, wie der Gassack (10).

10. Fahrzeugsicherheitssystem mit einem Gassack (10) gemäß einem der vorhergehenden Ansprüche 1 bis 9, und zumindest einer Sensoreinheit zum Erfassen von Daten sowie einer elektronischen Entscheidungseinheit, die geeignet ist, unter Einbeziehung der von der Sensoreinheit erfassten Daten das Vorliegen eines Auslösefalles für das Gassackmodul zu definieren und/ oder ein Auslösesignal an das Gassackmodul zu senden.

## Claims

1. An airbag (10) for a side curtain airbag system (20) comprising an airbag interior (30) defining one single chamber (40) in the deployed state of the airbag (10),
**characterized in that**
the chamber (40) comprises a gas guiding device (50) by which the chamber (40) is divided into at least one primary filling zone (41) and at least one secondary filling zone (42),
and when gas is supplied into the airbag interior (30) the gas is thus guided along the gas guiding device first into the primary filling zone (41) and a supply of gas into the secondary filling zone (42) is substantially not carried out before a particular primary filling level is reached,
wherein the primary filling zone (41) which is arranged spatially more distant from the at least one gas supply orifice (60) is less distant in the fluidic respect from the gas supply orifice (60) than the secondary filling zone (42) so that during filling the airbag (10) at first the primary filling zone (41) is filled with gas.

2. The airbag according to claim 1,
**characterized in that**
at least one primary filling zone (41) is arranged spatially more distant from the at least one gas supply orifice (60) than the secondary filling zone(s) (42) from the same at least one gas supply orifice (60).

3. The airbag according to any one of the preceding claims,
**characterized in that**
the gas guiding device (50) is formed **in that** at least two inner wall portions of the airbag (10) associated with each other are interconnected, preferably detachably, directly or by means of a spacer, especially by means of a spacer belt.

4. The airbag according to claim 3,
**characterized in that**
the inner wall portions of the airbag (10) or at least one longitudinal side of the spacer belt is/are connected to the inner wall portion of the airbag (10) associated with the respective longitudinal side of the spacer belt by means of a seam (52).

5. The airbag according to claim 4,
**characterized in that**
the seam (52) is in the form of a glued seam and/or a sealed seam and/or a stitched seam.

6. The airbag according to any one of the preceding claims 4 to 5,
**characterized in that**
the glued and/or sealed and/or stitched seam (52) has/have a different seam strength.

7. The airbag according to claim 2,
**characterized in that**
the gas guiding device (50) is formed by a tubing system (54) having at least one inlet opening (55) und at least one outlet opening (56), the inlet opening being in fluid connection with the gas supply orifice (60) of the airbag (10) and the at least one outlet opening (56) ending in the one or several primary filling zone(s) (41) of the chamber (40).

8. The airbag according to any one of the preceding claims 4 to 7,
**characterized in that**
the tubing system (54) and/or the seam (52) include(s) at least one weakened portion, for example in the form of a predetermined breaking point (57).

9. The airbag according to any one of the preceding claims 3 to 7,
**characterized in that**
the spacer, especially the spacer belt and/or the tubing system (54) are made of the same material as the airbag (10).

10. A vehicle safety system comprising an airbag (10) according to any one of the preceding claims 1 to 9 and at least one sensor unit for detecting data as well as an electronic decision-making unit which is adapted, while incorporating the data detected by the sensor unit, to define the presence of a trigger case for the airbag module and/or to send a trigger signal to the airbag module.

## Revendications

1. Coussin gonflable (10) pour un système d'airbag latéral (20), avec un intérieur de coussin gonflable (30) qui, à l'état déplié du coussin gonflable (10), définit une seule chambre (40)
**caractérisé en ce que**
la chambre (40) comprend un dispositif de guidage du gaz (50), au moyen duquel la chambre (40) est divisée en au moins une zone de remplissage primaire (41) et au moins une zone de remplissage secondaire (42),
et lors du remplissage du gaz à l'intérieur du coussin gonflable (30), le gaz est d'abord guidé le long du dispositif de guidage de gaz dans la zone de remplissage primaire (41) et le gaz n'est ensuite introduit dans la zone de remplissage secondaire (42) qu'après avoir atteint un certain état de remplissage primaire,
pour lequel la zone de remplissage primaire (41), qui est spatialement éloignée d'au moins une ouverture d'alimentation en gaz (60), est en terme d'écoulement des fluides à une distance plus petite de l'ouverture d'alimentation en gaz (60) que la zone de remplissage secondaire (42), de sorte que lors d'un remplissage du coussin gonflable (10), la zone de remplissage primaire (41) est remplie de gaz en premier.

2. Coussin gonflable selon la revendication 1,
**caractérisé en ce que**
au moins une zone de remplissage primaire (41) est spatialement plus éloignée d'au moins une ouverture d'alimentation en gaz (60) que la ou les zones de remplissage secondaires (42) de la même au moins ouverture d'alimentation en gaz (60).

3. Coussin gonflable selon l'une des revendications précédentes,
**caractérisé en ce que**
le dispositif de guidage de gaz (50) est formé **en ce qu'**au moins deux sections mutuellement associées de paroi intérieure du coussin gonflable (10) sont reliées l'une à l'autre directement ou au moyen d'une entretoise, en particulier au moyen d'une bande d'espacement, de préférence amovible.

4. Coussin gonflable selon la revendication 3,
**caractérisé en ce que**
les sections mutuellement associées de paroi intérieure du coussin gonflable (10) ou au moins un côté longitudinale de la bande d'espacement sont reliées au moyen d'une liaison (52) avec la section de paroi intérieure du coussin gonflable (10) associée à ce côté longitudinal respectif de la bande d'espacement.

5. Coussin gonflable selon la revendication 4,
**caractérisé en ce que**
la liaison (52) est conçue comme une liaison adhésive et/ou comme une liaison scellée et/ou comme une couture.

6. Coussin gonflable selon l'une des revendications 4 à 5 précédentes,
**caractérisé en ce que**
la liaison adhésive et/ou scellée et/ou cousue (52) a une résistance de couture différente.

7. Coussin gonflable selon la revendication 2,
**caractérisé en ce que**
le dispositif de guidage de gaz (50) est formé par un système de tuyaux (54) qui a au moins une ouverture d'entrée (55) et au moins une ouverture de sortie (56), pour lequel l'ouverture d'entrée (55) est reliée en terme d'écoulement des fluides avec l'ouverture d'alimentation en gaz (60) du coussin gonflable (10) et la au moins une ouverture de sortie (56) débouche dans la ou les multiples zone(s) de remplissage primaire (41) de la chambre (40).

8. Coussin gonflable selon l'une des revendications 4 à 7 précédentes,
**caractérisé en ce que**
le système de tuyaux (54) et/ou la liaison (52) présente(nt) au moins une section d'affaiblissement, par exemple sous la forme d'un point de rupture prédéterminé (57).

9. Coussin gonflable selon l'une des revendications 3 à 7 précédentes,
**caractérisé en ce que**
l'entretoise, en particulier la bande d'espacement, et/ou le système de tuyaux (54) sont constitués du même matériau que le coussin gonflable (10).

10. Système de sécurité de véhicule avec un coussin gonflable (10) selon l'une des revendications 1 à 9 précédentes, et au moins une unité de capteur pour l'enregistrement des données et une unité de décision électronique, qui est adaptée, sous interprétation des données détectées par l'unité de capteur pour définir l'existence d'un cas de déclenchement pour le module de coussin gonflable et/ou pour envoyer un signal de déclenchement au module de coussin gonflable.
